(19) Europäisches Patentamt
European Patent Office
Office européen des brevets

(11) **EP 3 327 625 A1**

(12) **EUROPEAN PATENT APPLICATION**

(43) Date of publication:
**30.05.2018 Bulletin 2018/22**

(51) Int Cl.:
**G06K 9/00** *(2006.01)* **G06T 5/00** *(2006.01)*
**G06T 7/579** *(2017.01)*

(21) Application number: **17204201.2**

(22) Date of filing: **28.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.11.2016 TW 105139303**
**24.05.2017 TW 106117250**

(71) Applicant: **Autoequips Tech Co., Ltd.**
**235 New Taipei City (TW)**

(72) Inventors:
• **HSU, Tzu-Chien**
**402 Taichung City (TW)**
• **YOU, Kai-Jie**
**600 Chiayi City (TW)**

(74) Representative: **Lang, Christian**
**LangPatent Anwaltskanzlei**
**IP Law Firm**
**Rosenheimer Straße 139**
**81671 München (DE)**

(54) **VEHICLE IMAGE PROCESSING METHOD AND SYSTEM THEREOF**

(57) The invention provides a vehicle image processing method for an user, the method comprises an optical flow based motion compensation step, an object detection step, a warning step and a 3D modeling step. The optical flow based motion compensation step can use a motion compensation means for removing the optical flow of the background. The object detection step can coordinate and calculate with the warning step to update the image data. The 3D modeling step can improve the bending phenomenon prior.

```
┌─────────────────────────────────────────┐
│ An optical flow based motion compensating│ ── S100
│           step is provided.              │
└─────────────────────────────────────────┘
                    ⇓
┌─────────────────────────────────────────┐
│ An object detection computing step is    │ ── S200
│              provided.                   │
└─────────────────────────────────────────┘
                    ⇓
┌─────────────────────────────────────────┐
│       A warning step is provided.        │ ── S300
└─────────────────────────────────────────┘
                    ⇓
┌─────────────────────────────────────────┐
│     A 3D modeling step is provided.      │ ── S400
└─────────────────────────────────────────┘
```

Fig. 1

EP 3 327 625 A1

**Description**

**BACKGROUND**

Technical Field

The present disclosure relates to an image processing method and a system thereof. More particularly, the present disclosure relates to a vehicle image processing method and a system thereof for accurately and rapidly determining an obstacle and reducing cost.

Description of Related Art

With the continuous development of science and technology, digital image processing technology continues to progress. Digital image processing with other system equipment will do more and higher quality automation applications. In the prior art, vehicle image processing usually combines detection results with other tracking methods for correctly detecting possible physical objects in images of moving objects around a vehicle. Moving objects and non-moving background or other static objects obtained in the related features analysis by using computing capabilities of a computer for correctly determining and analyzing image features. In order to achieve such an effect, the computer needs to perform a lot of computation and analyzed a lot of information. In addition, an execution speed is slowed due to a demand of real-time display and a complexity of a detection algorithm. As a result, the considerations of the speed and the accuracy are still conflicting technical requirements today.

In recent years, there are many researches and applications of vehicle moving object detection methods, such as a background subtraction method, an optical flow method, a single Gaussian model or a mixed Gaussian model. For example, there is a front view monitoring apparatus disclosed in CN100471263, which can accurately detect approaching objects presented in a lateral area of a protuberance of the vehicle to inform persons inside the vehicle about the approaching objects. The front view monitoring apparatus performs an arithmetic analysis according to an optical flow vector optical flow vector computed from the image, and detects the approaching object using the optical flow vector along a traveling direction of the vehicle in the image. In this prior art, the front view monitoring apparatus includes a notifying unit for displaying the image and further notifying a detected approaching object.

However, the prior art still only considers the accurate movement of the approaching object, and does not provide any technical descriptions on how to accurately obtain a determined result and save the computation time.

In addition, in densely populated driving environment of a modern city, drivers often face a challenge that the vehicles and pedestrians grab road mutually, which virtually increase pressure of the driver. If the driver does not notice a blind vision or without a good around view warning system, it will be easy to cause an accidental collision

There are many advanced driver assistance systems (ADASs) currently available on the market, for example, laser, ultrasonic wave, infrared rays, millimeter-wave radar or optical radar are commonly used in obstacle detection. However, there are some shortcomings of these ADASs. The infrared ray is easily affected by light, hence it is more suitable used at night and can not detect transparent objects. The ultrasonic wave is slow and easily be interfered, and ultrasonic wave only can detect flat obstacles. The laser and the optical radar are expensive, while the millimeter-wave radar is affected by the rain and is prone to deflection. In addition, the millimeter-wave radar containing high electromagnetic waves has a potential to cause a harm to the human body.

Therefore, it is commercially desirable to develop an image-based method by using image-based fast computing to timely detection of obstacles with competitive prices and ease of installation. Moreover, it can be integrated into a 3D around view monitoring (AVM) system structure to achieve a warning effect on no blind vision of the obstacle detection.

**SUMMARY**

Therefore, a purpose of the present disclosure is to provide a vehicle image processing method and a system thereof that can effectively improve an accuracy, improve a bending phenomenon and effectively eliminate background noise.

According to one aspect of the present disclosure, a vehicle image processing method includes providing an optical flow based motion compensating step, providing an object detection computing step, providing a warning step, and providing a 3D modeling step. In the optical flow based motion compensating step, an image is used to separate an average optical flow value of a right region and an average optical flow value of a left region for determining, and a background optical flow image is excluded by a motion compensation for obtaining an object optical flow image. In the object detection computing step, the object optical flow image is horizontally projected to obtain a horizontal projection block, and the horizontal projection block is back projected to obtain an object block. In the warning step, a vertical edge image of the object optical flow image within a region of interest (ROI) is determined, and the object block and the vertical edge image are compared to form an updated object block. In the 3D modeling step, the updated object block is used for 3D modeling to generate an obstacle model, and the obstacle model is integrated into a 3D around view monitoring.

According to another aspect of the present disclosure, a vehicle image processing system applied to the aforementioned vehicle image processing method is provided. The vehicle image processing system includes a vehicle, a computer, a plurality of cameras and a display device. The computer is disposed on the vehicle. The cameras are disposed on the vehicle and connected to the computer. The display device is disposed on the vehicle for displaying the 3D around view monitoring and the obstacle model in the 3D around view monitoring.

According to still another aspect of the present disclosure, a vehicle image processing method includes providing an optical flow based motion compensating step, providing an object detection computing step, and providing a warning step. In the optical flow based motion compensating step, an image is used to separate an average optical flow value of a right region and an average optical flow value of a left region for determining, and a background optical flow image is excluded by a motion compensation for obtaining an object optical flow image. In the object detection computing step, the object optical flow image is horizontally projected to obtain a horizontal projection block, and the horizontal projection block is back projected to obtain an object block. In the warning step, whether a warning is given or not is based on the object block.

In one example, in the warning step, a vertical edge image of the object optical flow image within a region of interest (ROI) is determined, the object block and the vertical edge image are compared to form an updated object block, and a warning is given when the updated object block overlaps the ROI.

In one example, the vehicle image processing method can further provide a ROI defining step, wherein the ROI defining step is for virtually establishing the ROI, and the ROI is a trapezoid. In one example, the vehicle image processing method can further provide an obstacle detecting range defining step, wherein the obstacle detecting range defining step is for virtually establishing an obstacle detection range according to the image. In one example, the vehicle image processing method can further provide a tracking range defining step, wherein the tracking range defining step is for virtually establishing a tracking range according to the image, the tracking range surrounds the obstacle detecting range, and the obstacle detecting range surrounds the ROI.

The aforementioned motion compensation mode defines shake optical flows of a non-stationary scene as the object optical flow image, and compensates all the shake optical flows that are not in the moving direction of the object optical flow image to the background optical flow image. The motion compensation method is based on the conventional optical flow method, and it does not be illustrated here.

In one example, the vehicle image processing method can further provide an obstacle detecting range defining step, wherein the obstacle detecting range defining step is for virtually establishing an obstacle detection range according to the image. In one example, in the obstacle detecting range defining step, the object block can be expanded to an expansion block, and a plurality of noise signals and color information between the object block and the expansion block can be removed so as to form the obstacle detection range with a clear division.

According to yet another aspect of the present disclosure, a vehicle image processing system applied to the aforementioned vehicle image processing method is provided. The vehicle image processing system includes a vehicle, a computer, a plurality of cameras and a warning device. The computer is disposed on the vehicle. The cameras are disposed on the vehicle and connected to the computer. The warning device is disposed on the vehicle for providing a warning when the updated object block overlaps the ROI.

## BRIEF DESCRIPTION OF THE DRAWINGS

The present disclosure can be more fully understood by reading the following detailed description of the embodiment, with reference made to the accompanying drawings as follows:

Fig. 1 is a flow chart showing a vehicle image processing method according to one embodiment of the present disclosure;

Fig. 2 is a flow chart showing an operation of a vehicle image processing system applied to the vehicle image processing method of Fig. 1 according to another embodiment of the present disclosure;

Fig. 3 is a schematic diagram of a 3D around view monitoring displayed by a display;

Fig. 4 is a schematic diagram illustrating a definition of feature points in the 3D around view monitoring;

Fig. 5 is a schematic diagram illustrating a definition of optical points of the 3D around view monitoring;

Fig. 6 is a schematic diagram of a left region;

Fig. 7 is a schematic diagram of a right region;

Fig. 8 is a schematic diagram showing a non-object excluded by a motion compensation;

Fig. 9 is a schematic diagram showing an image before removing a background optical flow image and a ground optical flow image;

Fig. 10 is a diagram showing a motion compensation according to a distance between a vanishing point and the pixel optical flow point;

Fig. 11 is a schematic diagram showing the background optical flow image and the ground optical flow image after removal;

Fig. 12 is a diagram showing an object optical flow image after horizontal projection;

Fig. 13 is a diagram showing an object block obtained by back projection;

Fig. 14 is a schematic diagram showing the optical flow points only taken from an upper block;

Fig. 15 is a schematic diagram showing a horizontal projection block only taken from an upper block;

Fig. 16 is a schematic diagram showing a vertical edge image of the object optical flow image;

Fig. 17 is a schematic diagram showing a process of obtaining an updated object block;

Fig. 18 is a schematic diagram showing the updated object block;

Fig. 19 is a schematic diagram showing a vehicle texture determining;

Fig. 20 is a schematic diagram showing a background information removal;

Fig. 21A is a schematic diagram showing a 3D around view monitoring before an improvement.; and

Fig. 21B is a schematic diagram showing a 3D around view monitoring after the improvement.

## DETAILED DESCRIPTION

A plurality of embodiments of the present disclosure will be illustrated in the accompanying drawings. For the sake of clarity, many practical details will be described in the following description. However, it should be understood that the practical details should not be used to limit the present disclosure during reading. That is, in some embodiments of the present disclosure, these practical details are not necessary. In addition, to simplify the drawings, some conventional structures and elements are schematically shown in the drawings. Wherever possible, the same reference numbers are used in the drawings and the description to refer to the same or like parts.

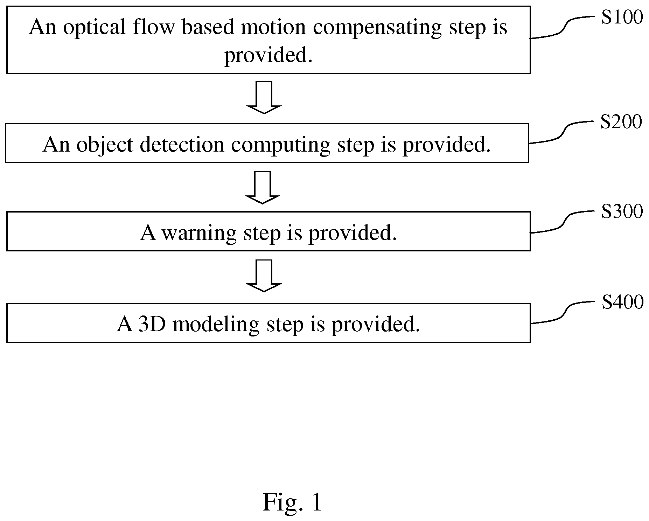

Please refer to Fig. 1, Fig. 1 is a flow chart showing a vehicle image processing method according to one embodiment of the present disclosure. The vehicle image processing method includes an optical flow based motion compensating step S100, an object detection computing step S200, a warning step S300 and a 3D modeling step S400. In the optical flow based motion compensating step S100, an image is used to separate an average optical flow value of a right region and an average optical flow value of a left region for determining, and a background optical flow image is excluded by a motion compensation for obtaining an object optical flow image. In the object detection computing step S200, the object optical flow image is horizontally projected to obtain a horizontal projection block, and the horizontal projection block is back projected to obtain an object block. In the warning step S300, a vertical edge image of the object optical flow image within a region of interest (ROI) is determined, and the object block and the vertical edge image are compared to form an updated object block. In the 3D modeling step S400, the updated object block is used for 3D modeling to generate an obstacle model, and the obstacle model is integrated into a 3D around view monitoring.

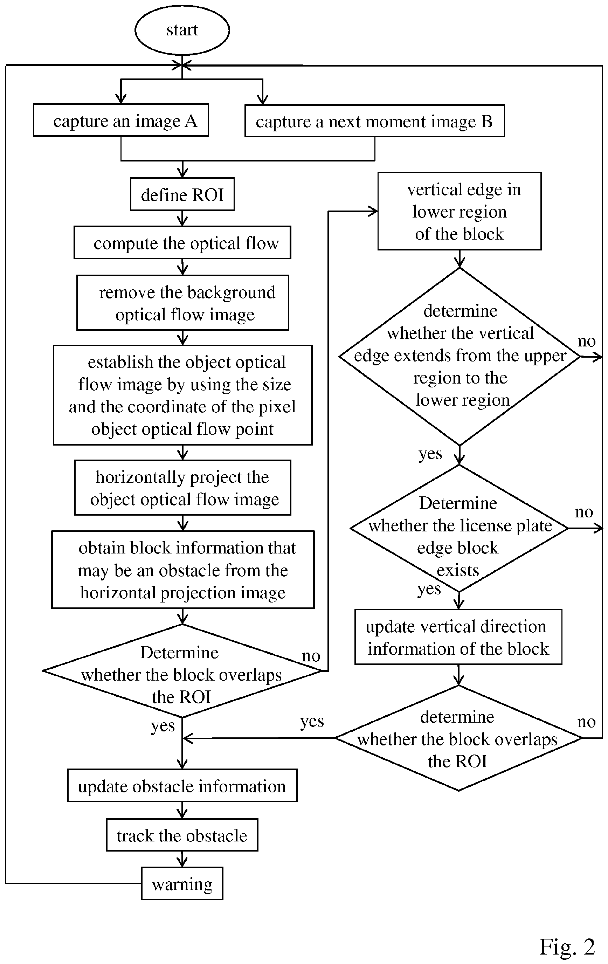

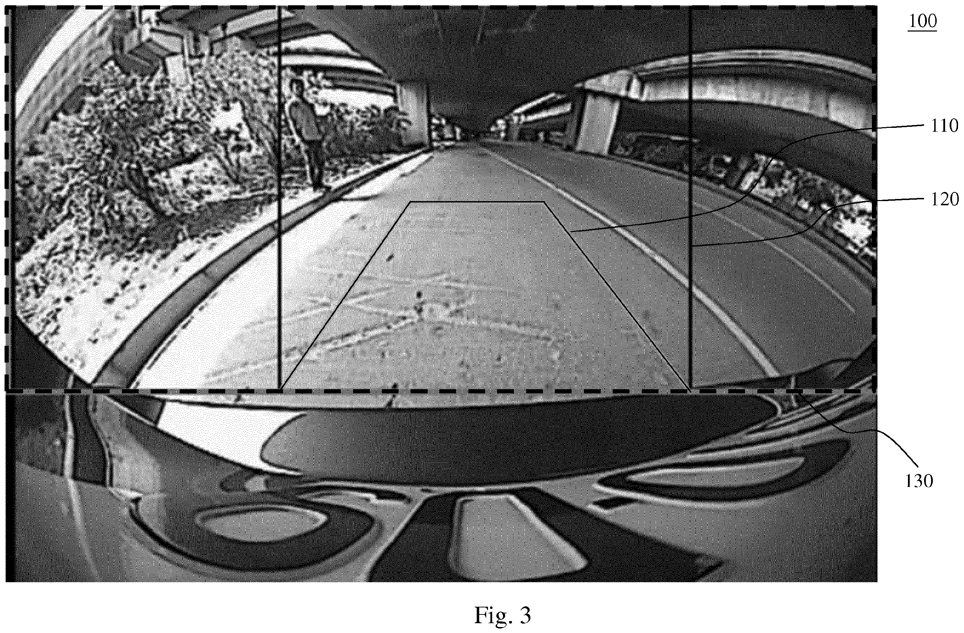

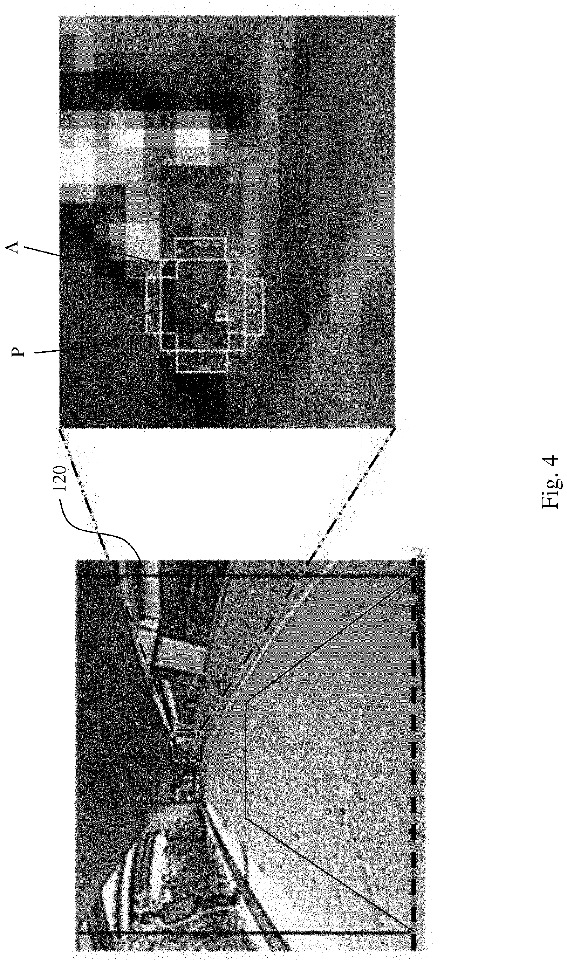

Please refer to Figs. 2 to 20, Fig. 2 is a flow chart showing an operation of a vehicle image processing system applied to the vehicle image processing method of Fig. 1 according to another embodiment of the present disclosure. When the vehicle image processing system is started, images 100 (for example, an image A and a next moment image B) are captured by a camera, and then different Regions of Interest (ROI) of the images 100 are defined. In Fig. 2, a ROI 110 is a trapezoid circled in a central area, and a warning will be given to a driver when any object enters the ROI 110. In Fig. 2, an obstacle detecting range 120 is a range circled by a square in the central area, and a tracking range 130 for detecting an operation of the object is a range circled by a rectangle in an outermost area. Therefore, the ROI 110 is within the obstacle detecting range 120 while the obstacle detecting range 120 is within the tracking range 130. Please refer to Fig. 3, Fig. 3 is a schematic diagram of a 3D around view monitoring displayed by a display. After defining the ROI 110, the obstacle detecting range 120 and the tracking range 130, the vehicle image processing system detects feature points of FAST (Features From Accelerated Segment Test) in the obstacle detecting range 120. Please refer to Fig. 4, Fig. 4 is a schematic diagram illustrating a definition of the feature points in the 3D around view monitoring. In the vehicle image processing system, a detection for the FAST feature points A will use each of pixel optical flow points as a center to observe grayscale changes of 16 points around the pixel optical flow point, then the feature points A, which are similar to corner points, will be found, and the feature points A will be stored for further a optical flow computation. The background optical flow image is removed after obtaining the object optical flow image and the background optical flow image. In the optical flow computation of the present disclosure, it is assumed that content shifts of the two adjacent images 100 (for example, the image A and the next moment image B) is small, and a smaller shift in a neighborhood of a research point P of Fig. 4 is close to a constant. Therefore, it can be assumed that an optical flow equation holds for all the pixel optical flow points $q_i$ in the window centered at the research point P. That is, optical flow values (Vx, Vy) of a local velocity are satisfied the following equation (1) and equation (2):

$$I_x(q_1)V_x + I_y(q_1)V_y = -I_t(q_1)$$

$$I_x(q_2)V_x + I_y(q_2)V_y = -I_t(q_2)$$

$$\vdots$$

$$I_x(q_n)V_x + I_y(q_n)V_y = -I_t(q_n) \quad\text{.....................................equation (1);}$$

$$I_xV_x + I_yV_y = -I_t \quad\text{.......................................................equation (2);}$$

where $q_1$, $q_2$,......, $q_n$ represent each of the pixel optical flow points in the window, respectively, and $I_x(q_i)$, $I_y(q_i)$ and $I_t(q_i)$ represent partial derivatives of one of the pixel optical flow points $q_i$ in one of the feature points of the image 100 and a current time T for position x, y and time t.

According to equation (2), there are two unknowns Vx and Vy, but there are more than two equations. Therefore, this system of the equations is an overdetermined system, that is, there is a residual in the system of equations, and there is no exact solution. In order to solve the overdetermined system, the system of the equations is organized into a matrix form to use a least square method for finding a nearest solution. The system of the equations is rewritten as matrix $Av = b$ and shown as equation (3):

$$A = \begin{bmatrix} I_x(q_1) & I_y(q_1) \\ I_x(q_2) & I_y(q_2) \\ \vdots & \vdots \\ I_x(q_n) & I_y(q_n) \end{bmatrix}, \quad v = \begin{bmatrix} V_x \\ V_y \end{bmatrix}, \quad \text{and} \quad b = \begin{bmatrix} -I_t(q_1) \\ -I_t(q_2) \\ \vdots \\ -I_t(q_n) \end{bmatrix};$$

$$Av = b \implies A^TAv = A^Tb \implies v = (A^TA)^{-1}A^Tb \quad\text{....equation (3).}$$

Finally, the optical flow values Vx and Vy and equation (4) can be obtained after shifting, and the equation (4) is shown as follows:

$$\begin{bmatrix} V_x \\ V_y \end{bmatrix} = \begin{bmatrix} \sum_i I_x(q_i)^2 & \sum_i I_x(q_i)I_y(q_i) \\ \sum_i I_y(q_i)I_x(q_i) & \sum_i I_y(q_i)^2 \end{bmatrix}^{-1} \begin{bmatrix} -\sum_i I_x(q_i)I_t(q_i) \\ -\sum_i I_y(q_i)I_t(q_i) \end{bmatrix} \cdots$$

..................................................................................................................equation (4).

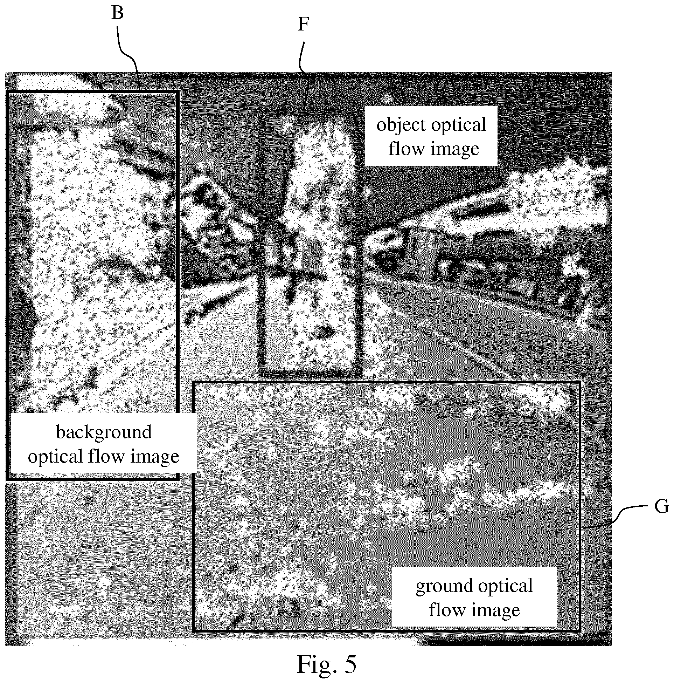

Please refer to Fig. 5. After the optical flow values Vx and Vy are obtained, it can be found that the obtained pixel optical flow points qi include the object optical flow image F, the background optical flow image B and a ground optical flow image G when the camera is moving.

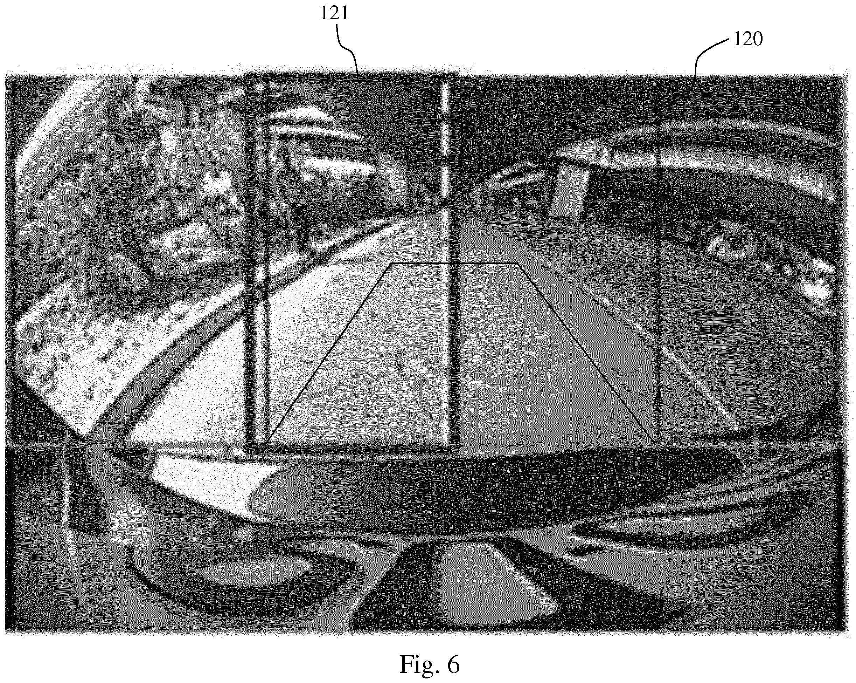

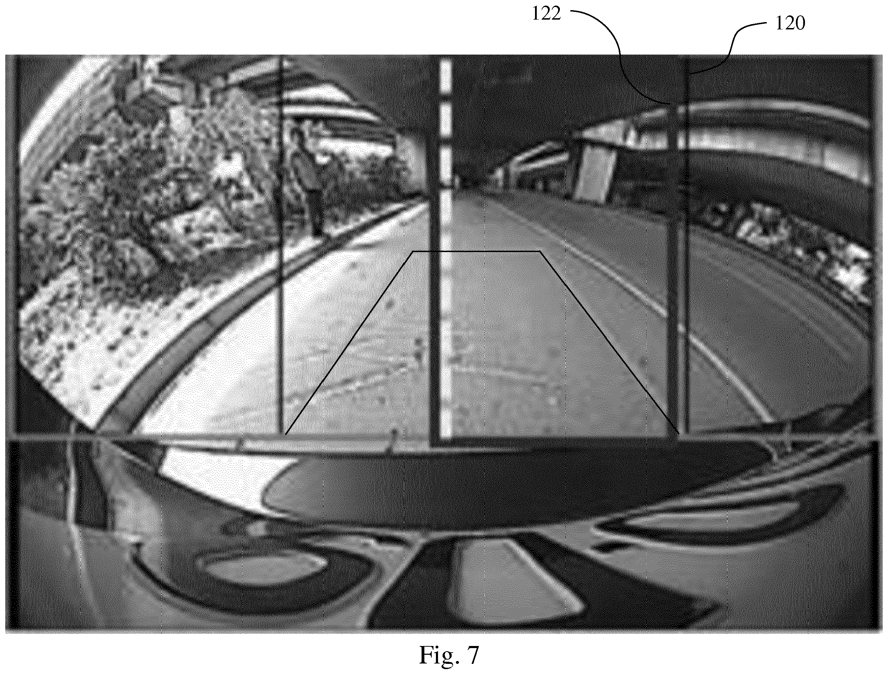

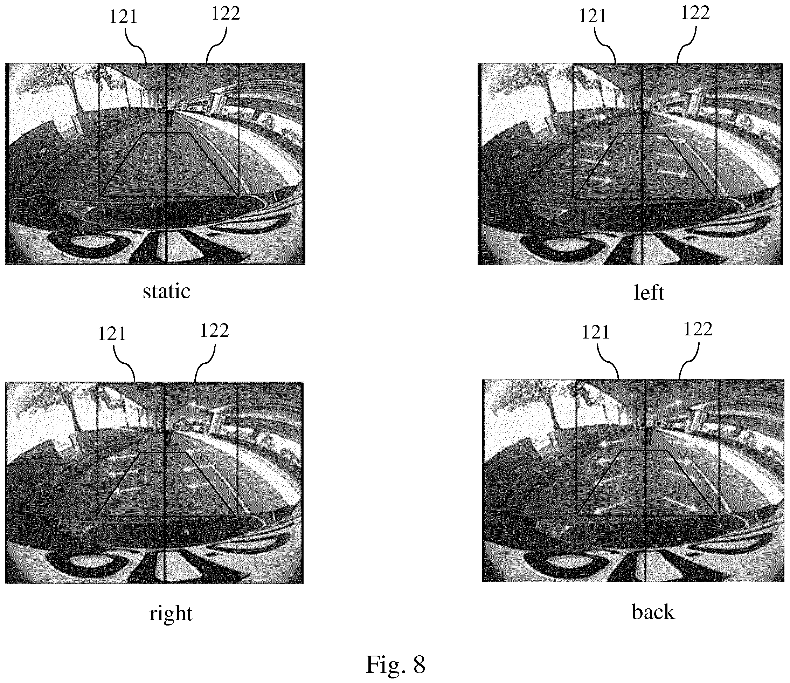

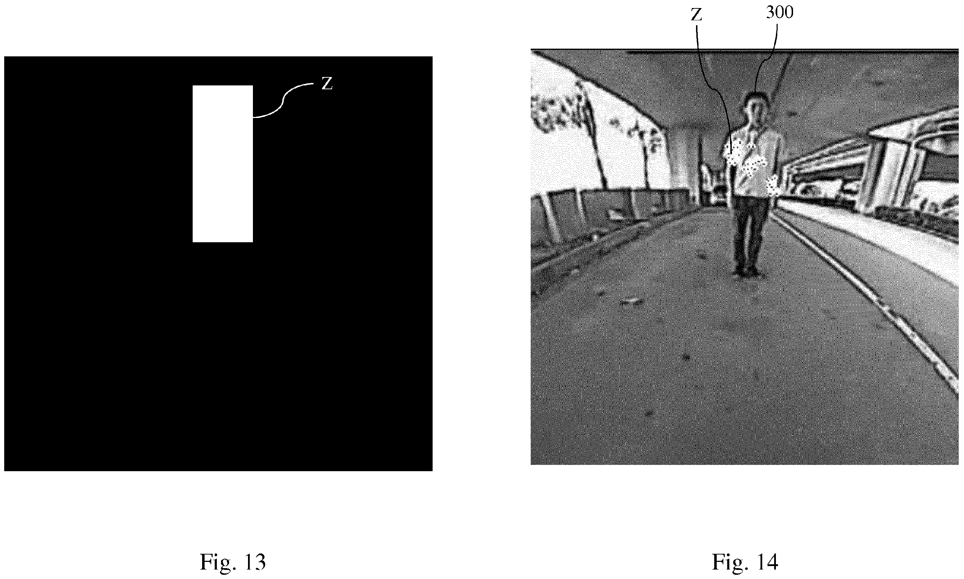

The background optical flow image B and the ground optical flow image G will affect an accuracy of finding the object block Z (Fig. 13). Therefore, the background optical flow image B and the ground optical flow image G need to be excluded. For excluding non-object optical flow image, it needs to know a current motion condition of the camera, for example, forward, back, left, right or static. In the present disclosure, the image in the obstacle detecting range 120 is divided into a left region 121 and a right region 122, and an average optical flow value of the left region 121 and an average optical flow value of the right region 122 are used for determining. Please refer to Figs. 6 and 7, the background optical flow image B is excluded by a motion compensation for obtaining the object optical flow image F. For example, when the motion condition of the camera is forward, back, left, right or static, the average optical flow in the horizontal direction of the left region 121 and the right region 122 will be as shown in Fig. 8, and relationships of the optical flow values in different motion conditions are shown in the following table:

| motion condition | the average optical flow value of the left region | the average optical flow value of the right region |
|---|---|---|
| back | negative (-) | positive (+) |
| left | positive (+) | positive (+) |
| right | negative (-) | negative (-) |
| static | the average optical flow value of the left region or the average optical flow value of the right region = 0 | |

In the aforementioned table, positive and negative represent the relationships of the optical flow values in the horizontal direction when the camera is static, left, right and back.

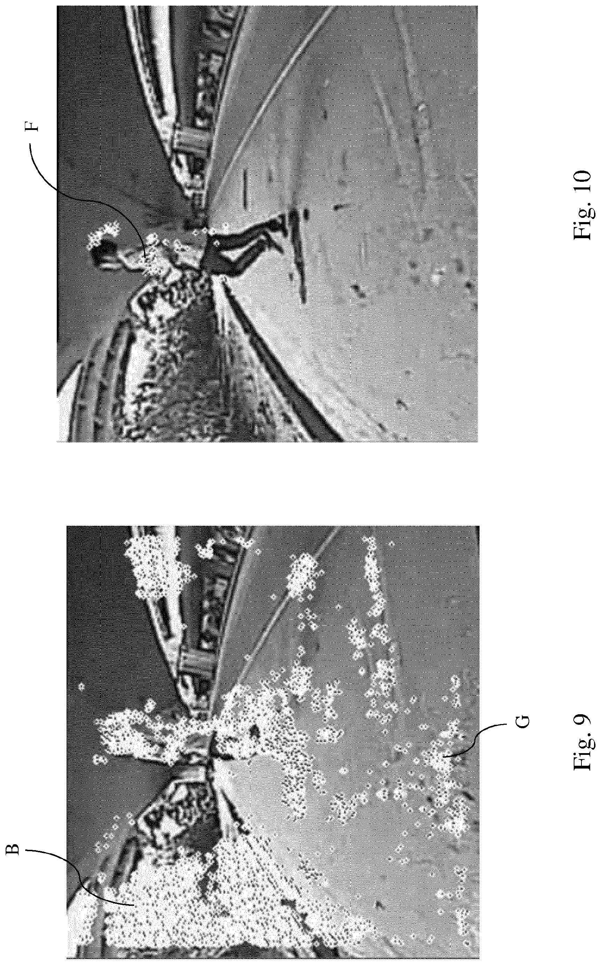

After determining the motion condition of the camera, the vehicle image processing system performs an appropriate motion compensation according to a size of the average optical flow value and a distance between the pixel optical flow point and a vanishing point so as to exclude the non-object optical flow image 300 (the background optical flow image B and the ground optical flow image G). Please refer to Figs. 9 and 10, Fig. 9 is a schematic diagram showing the image before removing the background optical flow image and the ground optical flow image, and Fig. 10 is a diagram showing the motion compensation according to the distance between the vanishing point and the pixel optical flow point.

Please refer to Fig. 2 again for further understanding a process of the motion compensation in the present disclosure. The optical flow value of the background optical flow image B changes with the distance of the pixel optical flow point and the vanishing point, and the size of the background optical flow image B changes with a moving speed of the camera. Therefore, these two variables are referenced for the motion compensation in the present disclosure. Assuming that the distance between the pixel optical flow point and the vanishing point is D, an absolute value of a horizontal average optical flow value is C, and a weight value is W, and the method of the motion compensation is to determine whether the optical flow value Vxy of each pixel optical flow point is smaller than a value of D*C*W or not. If the optical flow value Vxy is smaller than the value of D*C*W, it means that the pixel optical flow point is the background optical flow image B and should be removed. For the part of the weight value W, whether a position of the pixel optical flow point is greater than a coordinate of the vanishing point Y or not will be determined in the present disclosure, and the weight value W are different in an upper region and a lower region for the motion compensation. A method for excluding the lower region which is below the vanishing point (ground) is different from and the upper region which is above the vanishing point. In general, the ground optical flow image G is larger, while the object optical flow image F of the object 300 is in the upper region. It needs to avoid that the object optical flow image F is excluded. Although the pixel optical flow point in a lower part of the object is also excluded when the background optical flow image B is removed, the vehicle image processing system using a determination of a vertical edge image of the object optical flow image for solving this problem (please refer to Fig. 2). In the case of left turn or right turn, the value of the optical flow diverted to the left or right will be compensated by the value of C. For example, a positive (+) optical flow will be generated by the left turn, so the horizontal optical flow will be subtracted the value of C in the case of left turn. A negative (-) optical flow will be generated by the right turn, so the horizontal optical flow will be added the value of C in the case of right turn. As shown in Fig. 10, the remaining pixel optical flow points after the motion compensation is the object optical flow image F that we want to focus on.

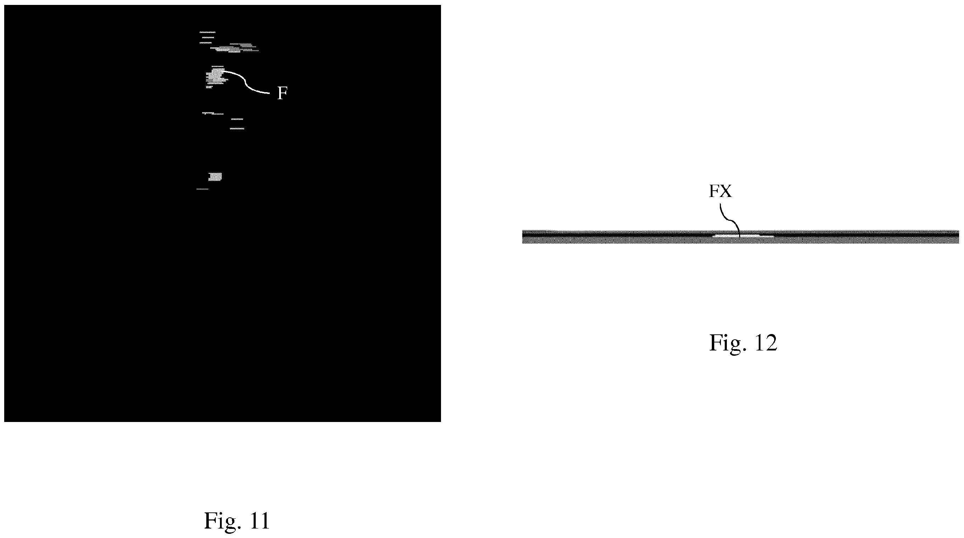

As shown in Fig. 11, the size and the position of the pixel optical flow point are used to establish a clear object optical flow image F in the present disclosure.

As shown in Fig. 12, the object optical flow image F is horizontally projected to obtain a horizontal projection image, and then the horizontal projection block FX is analyzed. Furthermore, block information is obtained according to the horizontal projection block FX found by the object optical flow image F. As shown in Fig. 13, the horizontal projection block FX is back projected to obtain a more complete object block Z in the present disclosure. In this way, it can make up for the shortcoming in the conventional optical flow method that it can only get local sparse points and thus cause a block fragmentation.

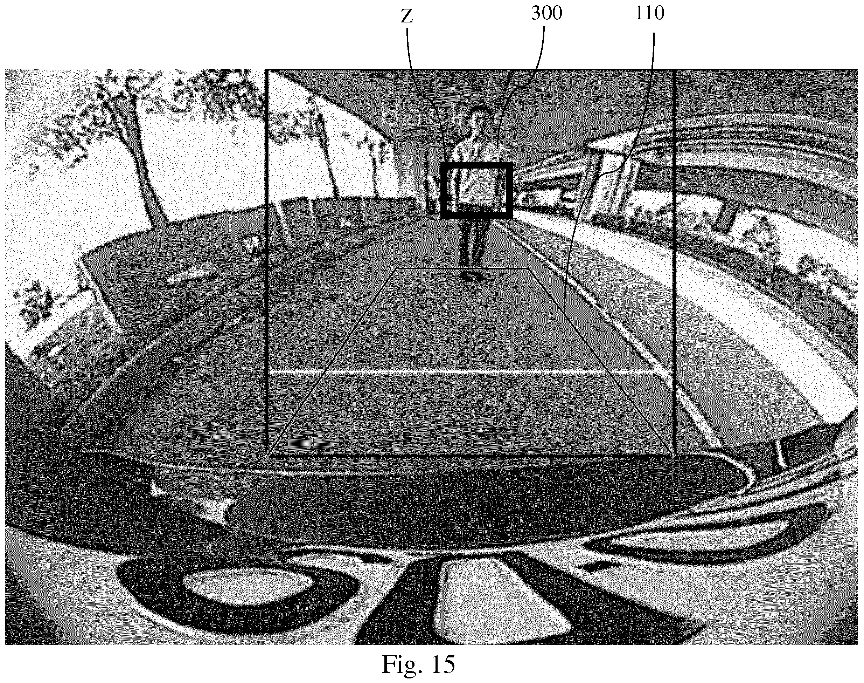

As shown in Fig. 14, in some cases, the pixel optical flow point on the object 300 may be also accidentally removed when the background optical flow image B is removed. As shown in Fig. 15, the object block Z may not be able to find a more complete block, as a result, the object 300 is within the trapezoidal ROI 110 but the detected defective object block Z is not within the trapezoidal ROI 110.

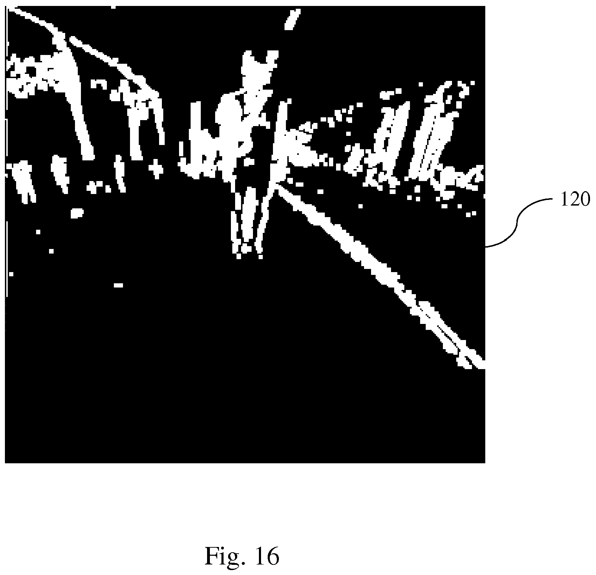

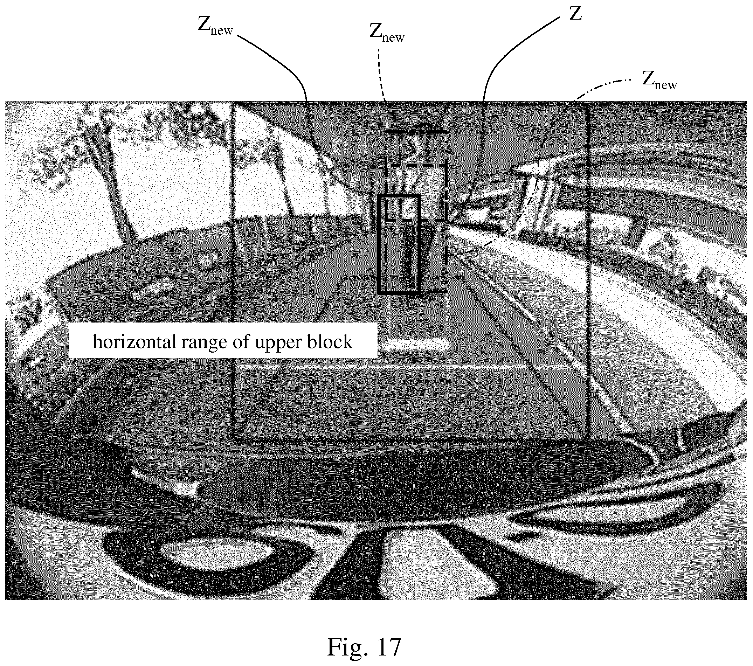

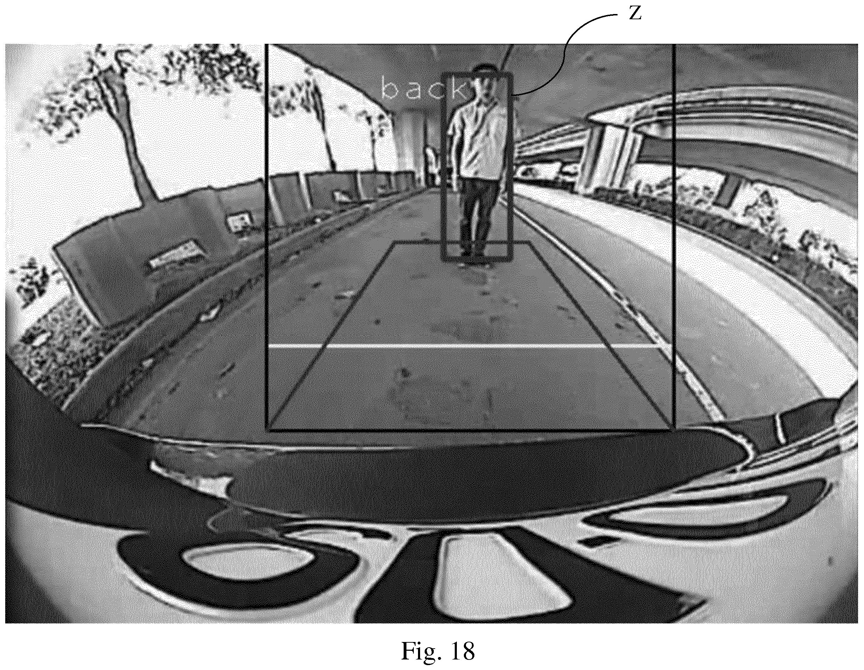

To solve the aforementioned problem, in the warning step of the present disclosure, the vertical edge image of the object optical flow image is determined, and the object block Z and the vertical edge image are compared to form an updated object block $Z_{new}$. As shown in Fig. 16, the present disclosure incorporates a concept of the vertical edge to find the vertical edge within the obstacle detection range 120. As shown in Figs. 17 and 18, whether a vertical edge of each object block Z observed in the present disclosure extends into the trapezoidal ROI or not is determined, if so, the vertical edges will be merged to gradually update selected ranges of the undated object block $Z_{new}$. Please also refer to Fig. 2, the warning is given when the ROI 110 overlaps the updated object block $Z_{new}$.

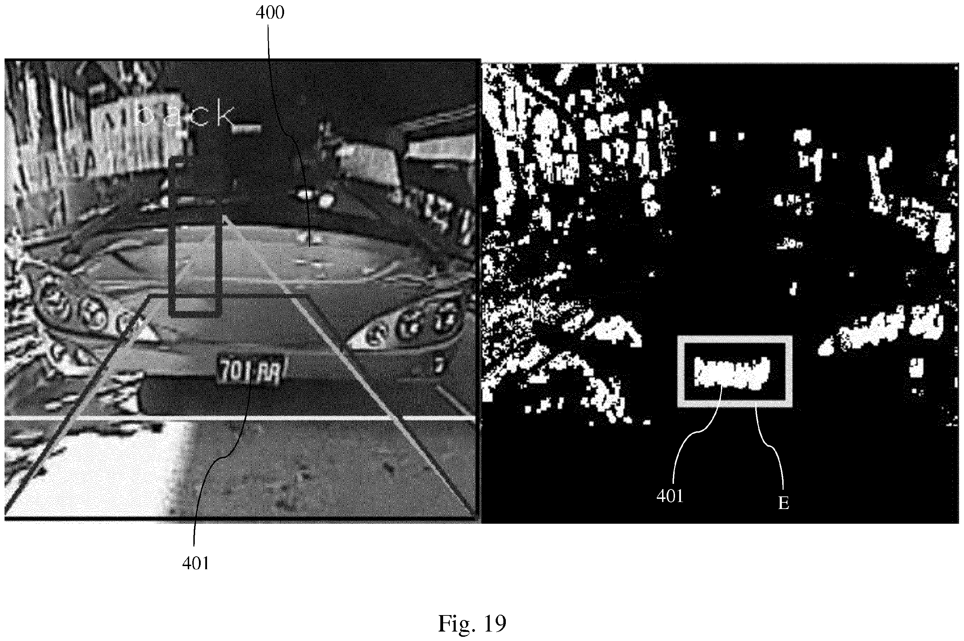

In the case where the obstacle is the vehicle 400, the vehicle image processing system of the present disclosure does not detect a significant vertical edge due to a texture of the vehicle 400, but instead, a rectangular license plate edge block E may be found in a portion of the license plate 401. As shown in Fig. 19, the characteristic of the license plate edge block E is used for determining in the present disclosure. If a rectangular license plate edge block E met the definition exists in the upper block, it is determined that it is the vehicle 400.

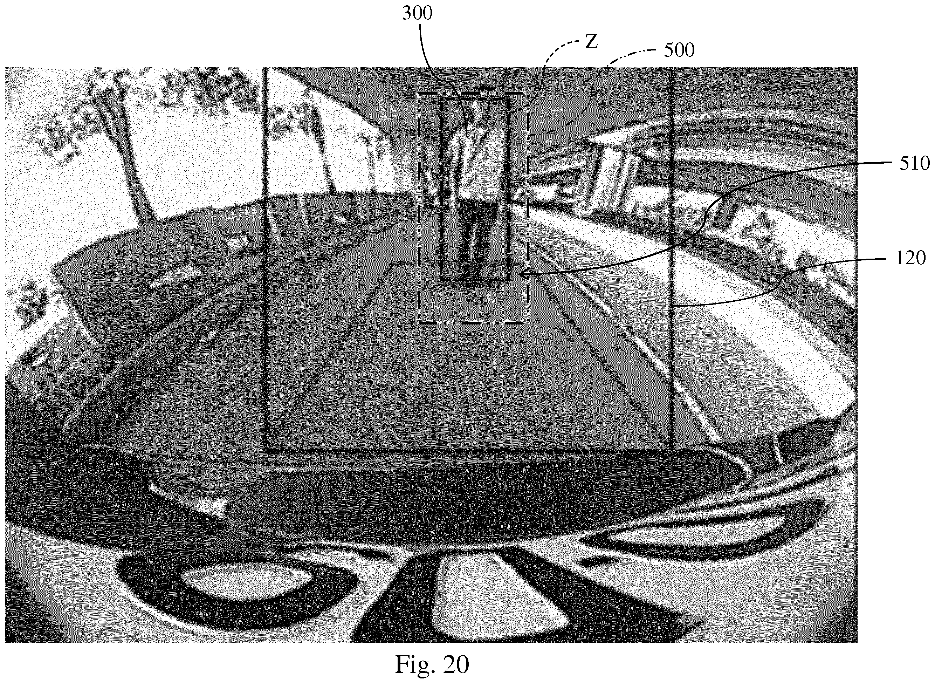

Please refer to Fig. 20, an obstacle detecting range defining step can be performed by an object tracking algorithm in the present disclosure. In the obstacle detecting range defining step, the obstacle detecting range 120 is established according to a virtual image, and the obstacle detecting range 120 can be further clearly divided for subsequent determination. The object tracking algorithm used in the present disclosure is mainly based on Camshift (Continuously Apative Mean-Shift), wherein the object is tracked by using H layer information of HSV in the conventional Camshift. In the vehicle image processing system of the present disclosure, the H layer information of HSV is changed to the U and V layers of YUV for tracking because of platform input image formats. In addition, there is an algorithm for removing background information in the present disclosure. The innermost box is the updated object block $Z_{new}$, which still contains the object 300 and the background information. The updated object block $Z_{new}$ is further expanded to an expansion block 500, and a slash range 510 between the updated object block $Z_{new}$ and the expansion block 500 is regarded as the background. In the present disclosure, noise signals and color information in the slash range 510 will be removed to form the obstacle detecting range 120 with a clearer internal division. After aforementioned processing, an inner of the obstacle detecting range 120 is divided again and clearly defined so as to effectively remove the background information and reduce probability of the updated object block $Z_{new}$ tracking to the background. As a result, the aforementioned method of the present disclosure can save a lot of computations for converting YUV color space to HSV color space. In addition, the aforementioned method with UV double layers information and the algorithm for removing background information can get a better tracking accuracy compared to the conventional Camshift.

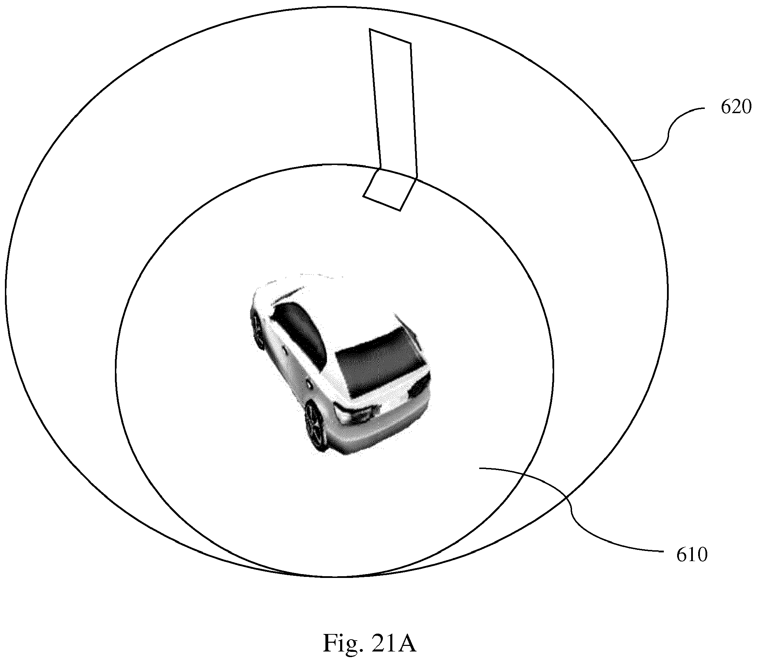

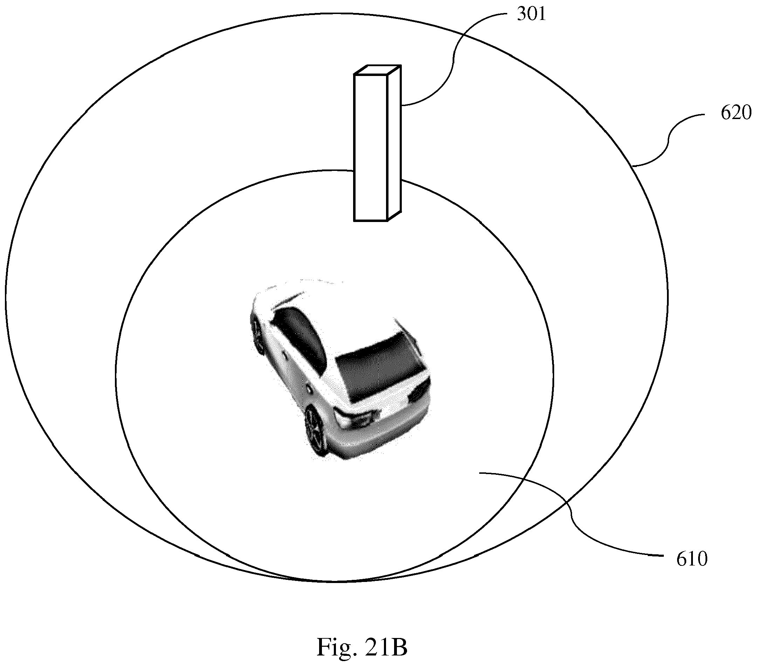

Please refer to Figs. 21A and 21B. Fig. 21A is a schematic diagram showing a 3D around view monitoring before an improvement. Fig. 21B is a schematic diagram showing a 3D around view monitoring after the improvement, wherein the 3D around view monitoring after the improvement is established by mapping a 3D model the obstacle model 301. A mapping method of the present disclosure compared with the mapping method of conventional 3D around view monitoring, a bending phenomenon of the obstacle is generated at a boundary between a bottom of the obstacle and surrounding map model in the mapping method of conventional 3D around view monitoring. In the present disclosure, a 3D modeling map of the obstacle model 301 of the object is used to solve the problem. In the 3D modeling step of the present disclosure, the updated object block is used for 3D modeling to generate an obstacle model 301, and the obstacle model is integrated into the 3D around view monitoring. In one embodiment of the present disclosure, the 3D around view monitoring is virtual as an open bowl. As shown in Fig. 21B, the display of the obstacle model 301 after the improvement does not affect by a bottom model map 610 and a surround model map 620 in the mapping method of the present disclosure, and a deformation, an attachment or a distortion does not be generated. Therefore, the 3D around view monitoring of the present disclosure can more accurately display a positional relationship between the obstacle model 301 and the driver, and the driver can change a viewing angle of a monitor according to the desired viewing angle for paying attention to a status of the obstacle model 301 around the vehicle. Fig. 21 shows that the obstacle model 301 of the object 300 does not deform, attach or distort in the 3D around view monitoring of the present disclosure in an actual scene.

Although the present disclosure has been described in considerable detail with reference to certain embodiments thereof, other embodiments are possible. Therefore, the spirit and scope of the appended claims should not be limited to the description of the embodiments contained herein.

**Claims**

1. A vehicle image processing method, comprising:

   providing an optical flow based motion compensating step (S100), wherein an image (100) is used to separate an average optical flow value of a right region and an average optical flow value of a left region for determining, and a background optical flow image (B) is excluded by a motion compensation for obtaining an object optical flow image (F);
   providing an object detection computing step (S200), wherein the object optical flow image (F) is horizontally projected to obtain a horizontal projection block (FX), and the horizontal projection block (FX) is back projected to obtain an object block (Z);
   providing a warning step (S300), wherein a vertical edge image of the object optical flow image (F) within a region of interest (ROI) (110) is determined, and the object block (Z) and the vertical edge image are compared to form an updated object block ($Z_{new}$); and
   providing a 3D modeling step (S400), wherein the updated object block ($Z_{new}$) is used for 3D modeling to generate an obstacle model (301), and the obstacle model (301) is integrated into a 3D around view monitoring.

2. The vehicle image processing method of claim 1, wherein, in the 3D modeling step (S400), the 3D around view monitoring is virtual as an open bowl.

3. The vehicle image processing method of claim 1, wherein, in the warning step (S300), a plurality of noise signals around the update object block ($Z_{new}$) are removed.

4. A vehicle image processing system applied to the vehicle image processing method of claim 1, the vehicle image processing system comprising:

   a vehicle;
   a computer disposed on the vehicle;
   a plurality of cameras disposed on the vehicle and connected to the computer; and
   a display device disposed on the vehicle for displaying the obstacle model (301) in the 3D around view monitoring.

5. A vehicle image processing method, comprising:

   providing an optical flow based motion compensating step (S100), wherein an image (100) is used to separate an average optical flow value of a right region (122) and an average optical flow value of a left region (121) for determining, and a background optical flow image (B) is excluded by a motion compensation for obtaining an object optical flow image (F);
   providing an object detection computing step (S200), wherein the object optical flow image (F) is horizontally projected to obtain a horizontal projection block (FX), and the horizontal projection block (FX) is back projected to obtain an object block (Z); and
   providing a warning step (S300), wherein a vertical edge image of the object optical flow image (F) within a region of interest (ROI) (110) is determined, the object block (Z) and the vertical edge image are compared to form an updated object block ($Z_{new}$), and a warning is given when the updated object block ($Z_{new}$) overlaps the ROI (110).

6. The vehicle image processing method of claim 5, further comprising:

   providing a ROI defining step, wherein the ROI defining step is for virtually establishing the ROI (110), which is a trapezoid.

7. The vehicle image processing method of claim 5, further comprising:

providing an obstacle detecting range defining step, wherein the obstacle detecting range defining step is for virtually establishing an obstacle detection range (120) according to the image (100).

8. The vehicle image processing method of claim 7, further comprising:

providing a tracking range defining step, wherein the tracking range defining step is for virtually establishing a tracking range (130) according to the image (100), the tracking range (130) surrounds the obstacle detecting range (120), and the obstacle detecting range (120) surrounds the ROI (110).

9. The vehicle image processing method of claim 7, wherein, in the optical flow based motion compensating step (S100), the obstacle detection range (120) of the image (100) is selected, and the obstacle detection range (120) is divided into the left region (121) and the right region (122).

10. A vehicle image processing system applied to the vehicle image processing method of claim 5, the vehicle image processing system comprising:

a vehicle;
a computer disposed on the vehicle;
a plurality of cameras disposed on the vehicle and connected to the computer; and
a warning device disposed on the vehicle for providing a warning when the updated object block ($Z_{new}$) overlaps the ROI (110).

11. A vehicle image processing method, comprising:

providing an optical flow based motion compensating step (S100), wherein an image (100) is used to separate an average optical flow value of a right region (122) and an average optical flow value of a left region (121) for determining, and a background optical flow image (B) is excluded by a motion compensation for obtaining an object optical flow image (F);
providing an object detection computing step (S200), wherein the object optical flow image (F) is horizontally projected to obtain a horizontal projection block (FX), and the horizontal projection block (FX) is back projected to obtain an object block (Z); and
providing a warning step (S300), wherein whether a warning is given or not is based on the object block (Z).

12. The vehicle image processing method of claim 11, further comprising:

providing an obstacle detecting range defining step, wherein the obstacle detecting range defining step is for virtually establishing an obstacle detection range (120) according to the image (100).

13. The vehicle image processing method of claim 12, wherein, in the obstacle detecting range defining step, the object block (Z) is expanded to an expansion block (500), and a plurality of noise signals and color information between the object block (Z) and the expansion block (500) so as to form the obstacle detection range (120) with a clear division.

| An optical flow based motion compensating step is provided. | S100 |

⇩

| An object detection computing step is provided. | S200 |

⇩

| A warning step is provided. | S300 |

⇩

| A 3D modeling step is provided. | S400 |

Fig. 1

EP 3 327 625 A1

Fig. 2

Fig. 3

EP 3 327 625 A1

Fig. 4

Fig. 5

Fig. 6

Fig. 7

static

left

right

back

Fig. 8

EP 3 327 625 A1

Fig. 9

Fig. 10

EP 3 327 625 A1

FX

Fig. 12

F

Fig. 11

Fig. 14

Fig. 13

Fig. 15

EP 3 327 625 A1

120

Fig. 16

Fig. 17

Fig. 18

Fig. 19

EP 3 327 625 A1

Fig. 20

Fig. 21A

Fig. 21B

Europäisches
Patentamt

European
Patent Office

Office européen
des brevets

## EUROPEAN SEARCH REPORT

Application Number

EP 17 20 4201

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MIN SU KIM ET AL: "Real-time moving object detection using a vehicle-mounted monocular rear-view fisheye camera", 2016 13TH INTERNATIONAL CONFERENCE ON ELECTRICAL ENGINEERING/ELECTRONICS, COMPUTER, TELECOMMUNICATIONS AND INFORMATION TECHNOLOGY (ECTI-CON), IEEE, 28 June 2016 (2016-06-28), pages 1-6, XP032958035, DOI: 10.1109/ECTICON.2016.7561385 [retrieved on 2016-09-06] | 10 | INV. G06K9/00 G06T5/00 G06T7/579 |
| A | * pages 1-4 * | 1-3,5-9, 11-13 | |
| | ----- | | |
| X | US 2015/178884 A1 (SCHOLL KAY-ULRICH [DE] ET AL) 25 June 2015 (2015-06-25) | 4 | |
| Y | * paragraph [0027] - paragraph [0333] * | 10 | |
| A | * paragraph [0046] - paragraph [0053] * | 1-3,5-9, 11,12 | |
| | ----- | | |

TECHNICAL FIELDS
SEARCHED (IPC)

G06K
G06T
H04N

The present search report has been drawn up for all claims

| Place of search | Date of completion of the search | Examiner |
|---|---|---|
| The Hague | 14 March 2018 | Wunderlich, Doreen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 4201

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2018

| Patent document cited in search report | Publication date | Patent family member(s) | Publication date |
|---|---|---|---|
| US 2015178884 A1 | 25-06-2015 | CN 105765966 A | 13-07-2016 |
| | | EP 3085074 A1 | 26-10-2016 |
| | | JP 6224251 B2 | 01-11-2017 |
| | | JP 2017502404 A | 19-01-2017 |
| | | KR 20160072190 A | 22-06-2016 |
| | | US 2015178884 A1 | 25-06-2015 |
| | | WO 2015094298 A1 | 25-06-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 100471263